# EUROPÄISCHE PATENTSCHRIFT

(11) **EP 3 336 583 B1**
(45) Veröffentlichungstag und Bekanntmachung des Hinweises auf die Patenterteilung: **26.03.2025**
(21) Anmeldenummer: 17202994.4
(22) Anmeldetag: 22.11.2017
(51) Int. Cl.: G01S 17/08, G01S 7/497

(54) **LASERENTFERNUNGSMESSER**
LASER RANGEFINDER
TÉLÉMÈTRE À LASER

(30) Priorität: 19.12.2016 DE 102016225411
(43) Veröffentlichungstag der Anmeldung: 20.06.2018
(73) Patentinhaber: Robert Bosch GmbH, 70442 Stuttgart (DE)
(72) Erfinder: Schmidtke, Bernd, 71229 Leonberg (DE); Loser, Ralf, 73235 Weilheim/Teck (DE); Zibold, Tobias, 70567 Stuttgart (DE); Giesen, Florian, 73760 Ostfildern (DE); Noe, Stefan, 70563 Stuttgart (DE)

(56) Entgegenhaltungen:
- EP-A1- 2 637 038
- EP-A1- 2 652 441
- DE-A1- 10 232 878

## Beschreibung

### Stand der Technik

Es sind bereits Verfahren zu einem Betrieb einer Entfernungsmessvorrichtung vorgeschlagen worden.

Entfernungsmessvorrichtungen und insbesondere optische Entfernungsmessvorrichtungen als solche und Verfahren zum Betrieb solcher Entfernungsmessvorrichtungen sind seit geraumer Zeit bekannt. Diese Geräte senden einen modulierten Messstrahl, beispielsweise einen Licht- oder Laserstrahl aus, der auf eingewünschtes Messobjekt, dessen Abstand zur Entfernungsmessvorrichtung zu ermitteln ist, ausgerichtet wird. Das von dem angepeilten Messobjekt reflektierte oder gestreute, rücklaufende Mess-Signal wird von der Entfernungsmessvorrichtung zumindest teilweise wieder detektiert und zur Ermittlung des gesuchten Abstandes verwendet.

Der Anwendungsbereich derartiger Entfernungsmessvorrichtungen umfasst im Allgemeinen Entfernungen im Bereich von einigen wenigen Millimetern bis zu mehreren hundert Metern. In Abhängigkeit von den zu messenden Laufstrecken, den Umweltbedingungen sowie der Rückstrahlfähigkeit des ausgewählten Messobjekts ergeben sich unterschiedliche Anforderungen an die Leistungsfähigkeit einer solchen Entfernungsmessvorrichtung. Derartige Entfernungsmessvorrichtungen werden mittlerweile in kompakter Ausführung kommerziell vertrieben und erlauben dem Bediener einen einfachen, handgehaltenen Betrieb.

So ist aus der DE 102 32 878 A1 bereits ein Verfahren zu einem Betrieb einer Entfernungsmessvorrichtung, insbesondere einer handgehaltenen Laserentfernungsmessvorrichtung bekannt, wobei in zumindest einem Verfahrensschritt zumindest eine Messgenauigkeitseinflusskenngröße, insbesondere mittels einer Sensoreinheit der Entfernungsmessvorrichtung, erfasst wird, wobei in zumindest einem Verfahrensschritt in Abhängigkeit von der Messgenauigkeitseinflusskenngröße, insbesondere mittels einer Recheneinheit der Entfernungsmessvorrichtung, eine erreichbare Messgenauigkeitsklasse bestimmt wird. Die erreichbare Messgenauigkeit oder Messgenauigkeitsklasse kann an den Bediener ausgegeben werden. Ferner sind aus EP 2 652 441 A1 und EP 2 637 038 A1 Entfernungsmessvorrichtungen bekannt.

### Offenbarung der Erfindung

Die Erfindung geht aus von einem Verfahren zu einem Betrieb einer handgehaltenen Laserentfernungsmessvorrichtung gemäß Anspruch 1 und von einer handgehaltenen Laserentfernungsmessvorrichtung gemäß Anspruch 7.

Vorteilhafte Ausführungsbeispiele sind durch die abhängigen Ansprüche definiert.

Es wird vorgeschlagen, dass in zumindest einem Verfahrensschritt in Abhängigkeit von der zumindest einen erfassten Messgenauigkeitseinflusskenngröße und/oder der erreichbaren Messgenauigkeitsklasse zumindest eine Handlungsanweisung in Form eines optischen, akustischen und/oder haptischen Signals, insbesondere mittels einer Ausgabeeinheit der Entfernungsmessvorrichtung, ausgegeben wird, die einem Benutzer eine Anweisung gibt, wie er die Laserentfernungsmessvorrichtung (12) zu verwenden hat, um eine Messgenauigkeitsklasse zu erreichen. In zumindest einem Verfahrensschritt (106) wird zumindest eine als Bewegungskenngröße ausgebildete Messgenauigkeitseinflusskenngröße mittels einer als optische Kameraeinheit (36) ausgebildeten Sensoreinheit (34) erfasst. Unter einer "Messgenauigkeitseinflusskenngröße" soll dabei insbesondere eine erfasste Kenngröße verstanden werden, die einen Einfluss auf eine Messungenauigkeit hat. Dabei ist die Messgenauigkeitseinflusskenngröße vorzugsweise als eine Helligkeit in einem erfassten Kamerabild, ein Kontrast in einem erfassten Kamerabild, ein Fremdlicht in einem erfassten Kamerabild, ein Histogramm (Helligkeits-/Farbverteilung) eines erfassten Kamerabilds, ein Wackeln, eine Bewegung bzw. Änderung in einer Serie von erfassten Kamerabildern, eine durch eine Entfernungsmessvorrichtung gemessene Bewegung, eine durch eine Inertialsensorik gemessene Bewegung, eine durch einen Drehratensensor gemessene Bewegung, eine Änderung eines Entfernungsmesswerts, ein Entfernungsmesswert oder als ein Rauschen/SNR eines Detektors der Entfernungsmessvorrichtung ausgebildet. Unter einer "Sensoreinheit" soll in diesem Zusammenhang insbesondere eine Einheit verstanden werden, die dazu vorgesehen ist, zumindest eine Kenngröße und/oder eine physikalische Eigenschaft aufzunehmen, wobei die Aufnahme aktiv, wie insbesondere durch Erzeugen und Aussenden eines elektrischen Messsignals, und/oder passiv, wie insbesondere durch eine Erfassung von Eigenschaftsänderungen eines Sensorbauteils, erfolgen kann. Es sind verschiedene, dem Fachmann als sinnvoll erscheinende Sensoreinheiten denkbar. Unter einer Sensoreinheit soll dabei insbesondere eine Kamera, eine Inertialsensorik oder ein Entfernungsmesschip (z.B. APD) verstanden werden. Unter einer "Messgenauigkeitsklasse" soll dabei insbesondere ein Bereich einer erreichbaren Messsicherheit verstanden werden, die mittels einer Einzelmessung bzw. einer Messreihe mit einer vorgegebenen Messzeit und/oder einer vorgegebenen Anzahl an Messpunkten erreichbar ist. Dabei weisen unterschiedliche Messunsicherheitsklassen verschiedene Bereiche auf, in denen eine Messung genau ist, wobei die Messungen dabei beispielsweise in einem Dezimeterbereich (dm), in einem Zentimeterbereich (cm) oder in einem Millimeterbereich (mm) genau sein können. Alternativ oder ergänzend können Messgenauigkeitsklassen auch in einer verbalen Beschreibung, wie z.B. "grob", "mittel", "fein" beschrieben werden. Unter einer "Handlungsanweisung" soll dabei ein von der Entfernungsmessvorrichtung an einen Bediener ausgegebenes optisches, akustisches und/oder haptisches Signal verstanden werden. Eine Handlungsanweisung ist dabei insbesondere als ein Signal ausgegeben, das einem Benutzer eine Anweisung gibt, wie er die Entfernungsmessvorrichtung zu bedienen hat. Dabei ist eine Handlungsanweisung insbesondere als Anweisung ausgebildet, die dem Bediener vermittelt, wie er die Entfernungsmessung zu verwenden hat, um eine bestimmte Messgenauigkeitsklasse zu erreichen und/oder welche Messgenauigkeitsklasse er bei der aktuellen Handhabung der Entfernungsmessvorrichtung erreicht und was er zu tun hat, um eine andere Messgenauigkeitsklasse zu erreichen. Dabei können Handlungsanweisungen insbesondere Vorschläge an den Bediener ausgeben, z.B. dass der Bediener die Entfernungsmessvorrichtung ruhiger in der Hand halten bzw. ein Stativ verwenden soll, dass der Bediener eine Beleuchtungssituation verändern und dazu beispielsweise einen Standortwechsel vornehmen soll, dass der Bediener ein Hilfsmittel, wie insbesondere eine Abschattung verwenden soll, dass der Bediener einen Reflektor zur Erhöhung der empfangenen Signalstärke verwenden soll, dass der Bediener einen Abstand zum Messobjekt verringern soll, um eine empfangene Signalstärke zu erhöhen, und/oder dass der Bediener eine Mindestanzahl an Messungen und/oder eine Mindestmessdauer vornehmen soll, um eine gewisse Messgenauigkeitsklasse zu erreichen. Unter einer "Recheneinheit" soll insbesondere eine Einheit mit einem Informationseingang, einer Informationsverarbeitung und einer Informationsausgabe verstanden werden. Vorteilhaft weist die Recheneinheit zumindest einen Prozessor, einen Speicher, Ein- und Ausgabemittel, weitere elektrische Bauteile, ein Betriebsprogramm, Regelroutinen, Steuerroutinen und/oder Berechnungsroutinen auf. Vorzugsweise sind die Bauteile der Recheneinheit auf einer gemeinsamen Platine angeordnet und/oder vorteilhaft in einem gemeinsamen Gehäuse angeordnet. Dadurch kann ein Bediener der Entfernungsmessvorrichtung zu einer Erzielung eines genauen Messergebnisses geführt werden, wodurch insbesondere eine einfache Bedienung der Entfernungsmessvorrichtung erreicht werden kann. Unter einer "Bewegungskenngröße" soll dabei insbesondere eine Kenngröße verstanden werden, die eine Bewegung der Entfernungsmessvorrichtung relativ zu seiner Umgebung beschreibt. Dabei ist eine Bewegungskenngröße vorzugsweise durch verschiedene Methoden mittels der optischen Kameraeinheit erfassbar, insbesondere durch einen optischen Unterschied zwischen zwei verschiedenen aufgenommenen Bildern, wobei beispielsweise ein Betrag einer Pixelverschiebung und/oder eine Positionsänderung eines Merkmals des Bilds, wie insbesondere einer Kante, eines Musters oder einer Struktur in dem Bild erfasst wird. Dabei kann der Unterschied bei zwei aufeinanderfolgenden Bildern ermittelt werden oder bei zwei oder mehreren in einem gewissen Zeitabstand aufgenommenen Bildern. Grundsätzlich ist es ebenso denkbar, dass mittels einer Erfassung anderer optischer Unterschiede eine Bewegungskenngröße ermittelt wird. Alternativ oder zusätzlich kann eine Bewegungskenngröße durch eine charakteristische Relativbewegung der Entfernungsmessvorrichtung zum Messobjekt, beispielsweise durch eine translatorische Verschiebung relativ zu dem Messobjekt ermittelt werden. Dadurch kann eine Bewegung des Entfernungsmessgeräts und/oder eines Messobjekts bei einer Bestimmung einer Handlungsanweisung vorteilhaft berücksichtigt werden und ein Bediener der Entfernungsmessvorrichtung besonders vorteilhaft zu einer Erzielung eines genauen Messergebnisses geführt werden.

Weiter wird vorgeschlagen, dass in zumindest einem Verfahrensschritt zumindest eine als Fremdlicht ausgebildete Messgenauigkeitseinflusskenngröße mittels einer als optische Kameraeinheit ausgebildeten Sensoreinheit, insbesondere mittels einer als optische Kameraeinheit ausgebildeten Sensoreinheit der Entfernungsmessvorrichtung, erfasst wird. Unter einem "Fremdlichtanteil" sollen dabei insbesondere Farben in dem von der optischen Kameraeinheit aufgenommenen Bild verstanden werden, die gleich/ähnlich einer Laserwellenlänge eines Lasers (unmodulierter Anteil des Lichts der Laserwellenlänge) sind, der zur Abstandsmessung vorgesehen ist. Unter einer als "Kameraeinheit ausgebildeten Sensoreinheit" soll dabei insbesondere ein optischer Sensor verstanden werden, der als Teil eines Entfernungsmessers oder als ein separater optischer Sensor ausgebildet sein kann. Dadurch kann ein Fremdlichtanteil bei einer Bestimmung einer Handlungsanweisung vorteilhaft berücksichtigt werden, wodurch vorzugsweise eine verbesserte Messung erreicht werden kann und ein Bediener der Entfernungsmessvorrichtung besonders vorteilhaft zu einer Erzielung eines genauen Messergebnisses geführt werden kann.

Ferner wird vorgeschlagen, dass in zumindest einem Verfahrensschritt zumindest eine als Kontrast ausgebildete Messgenauigkeitseinflusskenngröße mittels einer als optische Kameraeinheit ausgebildeten Sensoreinheit, insbesondere mittels einer als optische Kameraeinheit ausgebildeten Sensoreinheit der Entfernungsmessvorrichtung, erfasst wird. Unter einem "Kontrast" soll dabei insbesondere ein Kontrast eines Kamerabilds verstanden werden, wobei ein geringer Kontrast beispielsweise in Verbindung mit kurzer Belichtungsdauer einen Rückschluss auf Lichtverhältnisse während einer Entfernungsmessung erlaubt, wodurch die Lichtverhältnisse bei einer Entfernungsmessung ermittelt werden können. Dadurch kann ein Kontrast bei einer Bestimmung einer Handlungsanweisung berücksichtigt werden, die Handlungsanweisung insbesondere an die Lichtverhältnisse in der Umgebung der Entfernungsmessung angepasst werden und ein Bediener der Entfernungsmessvorrichtung besonders vorteilhaft zu einer Erzielung eines genauen Messergebnisses geführt werden.

Es wird weiterhin vorgeschlagen, dass in zumindest einem Verfahrensschritt zumindest eine als Helligkeit ausgebildete Messgenauigkeitseinflusskenngröße mittels einer als optische Kameraeinheit ausgebildeten Sensoreinheit, insbesondere mittels einer als optische Kameraeinheit ausgebildeten Sensoreinheit der Entfernungsmessvorrichtung, erfasst wird. Unter einer "Helligkeit" soll dabei insbesondere eine Intensität von Umgebungslicht im Verhältnis zum Licht des Lasers zur Entfernungsmessung verstanden werden. Eine ermittelte Helligkeit wird dabei insbesondere in ein Verhältnis zu einer Stärke des Lasers gebracht, da der Laser ab einer gewissen Helligkeit überstrahlt werden kann (Sättigung des Detektors o.Ä.). Dadurch kann eine Helligkeit bei einer Bestimmung einer Handlungsanweisung berücksichtigt werden und ein Bediener der Entfernungsmessvorrichtung besonders vorteilhaft zu einer Erzielung eines genauen Messergebnisses geführt werden.

Des Weiteren wird vorgeschlagen, dass in zumindest einem Verfahrensschritt zumindest eine als Bildhistogramm ausgebildete Messgenauigkeitseinflusskenngröße mittels einer als optische Kameraeinheit ausgebildeten Sensoreinheit, insbesondere mittels einer als optische Kameraeinheit ausgebildeten Sensoreinheit der Entfernungsmessvorrichtung, erfasst wird. Unter einem "Bildhistogramm soll dabei insbesondere eine Verteilung von Helligkeitswerten bzw. Farbwerten in einem von einem optischen Sensor erfassten Bild verstanden werden. Insbesondere erlaubt eine Auswertung des Bildhistogramms einer präzisere Bestimmung einer erreichbaren Messgenauigkeitsklasse durch Nutzung detaillierter Informationen eines Kamerabilds. Dadurch kann ein Bildhistogramm bei einer Bestimmung einer Handlungsanweisung berücksichtigt werden, eine besonders vorteilhaft präzise Bestimmung einer erreichbaren Messgenauigkeitsklasse erreicht und ein Bediener der Entfernungsmessvorrichtung besonders vorteilhaft zu einer Erzielung eines genauen Messergebnisses geführt werden.

Außerdem wird vorgeschlagen, dass in zumindest einem Verfahrensschritt zumindest eine als Bewegungskenngröße ausgebildete Messgenauigkeitseinflusskenngröße mittels einer als Inertialsensoreinheit ausgebildeten Sensoreinheit der Entfernungsmessvorrichtung erfasst wird. Unter einer "Bewegungskenngröße, die mittels der als Inertialsensoreinheit ausgebildeten Sensoreinheit ermittelt ist", soll dabei insbesondere eine Geschwindigkeit und/oder Beschleunigung, insbesondere der Entfernungsmessvorrichtung, verstanden werden. Die Bewegungskenngröße charakterisiert dabei insbesondere eine Relativbewegung der Entfernungsmessvorrichtung zum Messobjekt, insbesondere eine Geschwindigkeit/Beschleunigung bei einer Verschiebung und/oder einer Neigung/Drehung der Entfernungsmessvorrichtung relativ zu dem Messobjekt. Dabei kann eine Bewegungskenngröße, die mittels der als Inertialsensoreinheit ausgebildeten Sensoreinheit ermittelt ist, eine Bewegung der Entfernungsmessvorrichtung in und/oder quer zu einer Messrichtung darstellen. Dadurch kann vorteilhaft eine Bewegung des Entfernungsmessgeräts bei einer Bestimmung einer Handlungsanweisung berücksichtigt werden und somit insbesondere ein Bediener der Entfernungsmessvorrichtung besonders vorteilhaft zu einer Erzielung eines genauen Messergebnisses geführt werden.

Es wird weiter eine Entfernungsmessvorrichtung, insbesondere eine handgehaltene Laserentfernungsmessvorrichtung, die insbesondere gemäß dem oben beschriebenen Verfahren betreibbar ist, mit zumindest einer Sensoreinheit, die zu einer Erfassung zumindest einer Messgenauigkeitseinflusskenngröße vorgesehen ist, mit zumindest einer Recheneinheit, die dazu vorgesehen ist, die zumindest eine Messgenauigkeitseinflusskenngröße zu verarbeiten, und mit zumindest einer optischen, akustischen und/oder haptischen Ausgabeeinheit, vorgeschlagen, wobei in Abhängigkeit von der zumindest einen erfassten Messgenauigkeitseinflusskenngröße zumindest eine Handlungsanweisung mittels der Ausgabeeinheit ausgebbar ist. Dadurch kann vorteilhaft eine Entfernungsmessvorrichtung zur Durchführung des Verfahrens bereitgestellt werden, die besonders bedienerfreundlich ist.

Zudem wird vorgeschlagen, dass die Entfernungsmessungsvorrichtung zumindest eine als eine optische Kameraeinheit ausgebildete Sensoreinheit aufweist, die dazu vorgesehen ist, zumindest eine als Fremdlicht als Kontrast, als Helligkeit, als Bildhistogramm und/oder als Bewegungskenngröße ausgebildete Messgenauigkeitseinflusskenngröße zu erfassen. Dadurch kann eine Entfernungsmessvorrichtung bereitgestellt werden, die wenigstens eine Messgenauigkeitseinflusskenngröße vorteilhaft erkennen und einem Bediener eine entsprechende Handlungsweisung ausgeben kann, um den Bediener zu einem besonders genauen Messergebnis zu führen.

Des Weiteren wird vorgeschlagen, dass die Entfernungsmessungsvorrichtung zumindest eine als eine Inertialsensoreinheit ausgebildete Sensoreinheit aufweist, die dazu vorgesehen ist, zumindest eine als Bewegungskenngröße, insbesondere als eine Geschwindigkeit und/oder eine Beschleunigung, ausgebildete Messgenauigkeitseinflusskenngröße zu erfassen. Dadurch kann eine Entfernungsmessvorrichtung bereitgestellt werden, die wenigstens eine weitere Messgenauigkeitseinflusskenngröße vorteilhaft erkennen und einem Bediener eine entsprechende Handlungsweisung ausgeben kann, um den Bediener zu einem besonders genauen Messergebnis zu führen.

### Zeichnung

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung einer erfindungsgemäßen Entfernungsmessvorrichtung, die zum Betrieb mittels eines erfindungsgemäßen Verfahrens vorgesehen ist, und

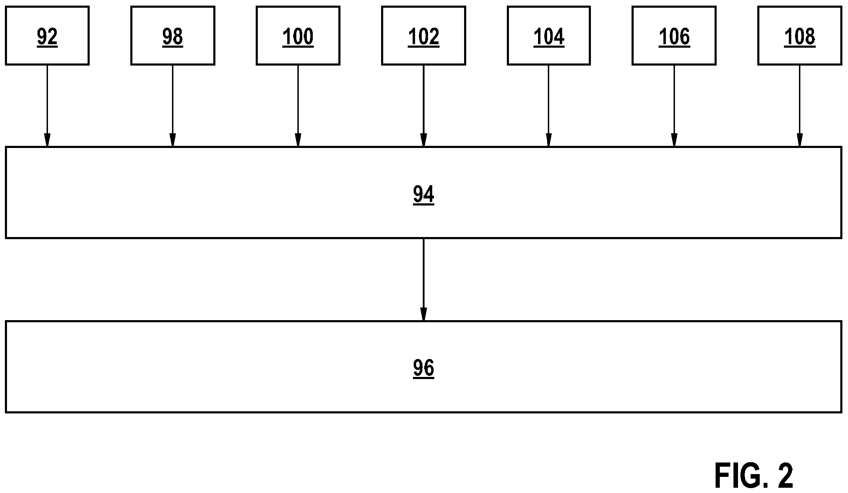

- Fig. 2: ein schematisch dargestelltes Ablaufdiagramm des erfindungsgemäßen Verfahrens mit verschiedenen Verfahrensschritten.

### Beschreibung des Ausführungsbeispiels

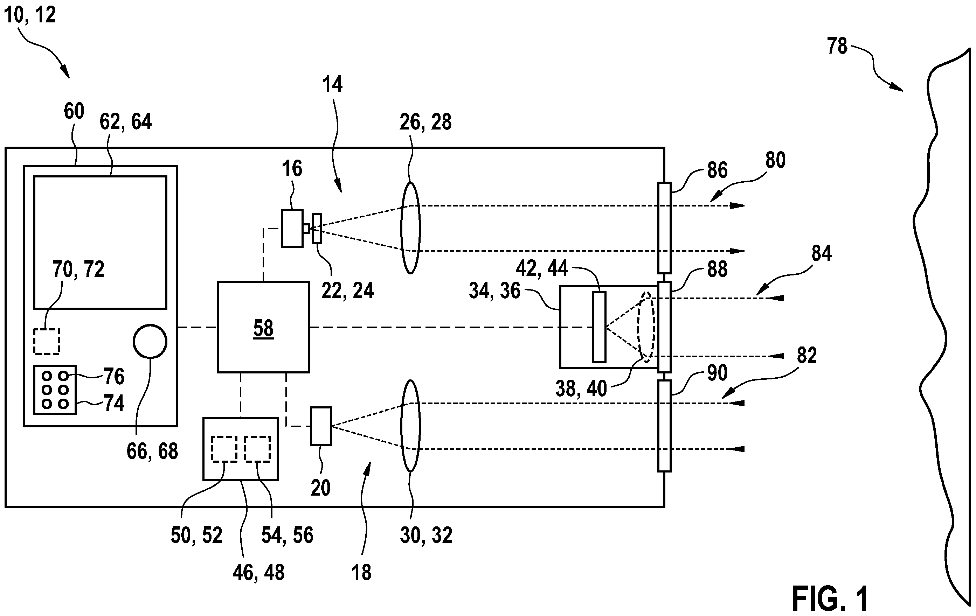

Die Figur 1 zeigt eine schematische Darstellung einer erfindungsgemäßen Entfernungsmessvorrichtung 10. Die Entfernungsmessvorrichtung 10 ist zur Durchführung eines erfindungsgemäßen Verfahrens vorgesehen. Dabei sind in der Figur 1 die wesentlichsten Komponenten zur Beschreibung des prinzipiellen Aufbaus der Entfernungsmessvorrichtung 10 abgebildet. Die Entfernungsmessvorrichtung 10 ist zur Ermittlung einer Distanz zwischen der Entfernungsmessvorrichtung 10 und einem Messobjekt 78 vorgesehen. Die Entfernungsmessvorrichtung 10 ist dabei als eine Laserentfernungsmessvorrichtung 12 ausgebildet. Die Entfernungsmessvorrichtung 10 ist als eine handgehaltene Laserentfernungsmessvorrichtung 12 ausgebildet. Ein Bediener kann die Entfernungsmessvorrichtung 10 vorzugsweise in einer Hand halten und eine Distanz zu einem entfernt angeordneten Messobjekt 78 ermitteln.

Die Entfernungsmessvorrichtung 10 weist eine Sendeeinheit 14 auf. Die Sendeeinheit 14 ist zur Erzeugung eines Messsignals vorgesehen. Mittels des Messsignals ist die Entfernungsmessvorrichtung 10 dazu vorgesehen, eine Entfernung zu einem Messobjekt 78 zu ermitteln. Die Sendeeinheit 14 umfasst eine Laserdiode 16. Die Laserdiode 16 ist dabei als eine Halbleiter-Laserdiode ausgebildet. Die Laserdiode 16 ist dazu vorgesehen, einen Laserstrahl auszusenden. Der Laserstahl, den die Laserdiode 16 aussendet, ist dabei in der Form eines für das menschliche Auge sichtbaren Laserbündels ausgebildet. Die Sendeeinheit 14 weist ein Strahlformungselement 22 auf, das den von der Laserdiode 16 ausgesendeten Laserstrahl umformt. Das Strahlformungselement 22 ist als eine Zylinderlinse 24 ausgebildet. Das Strahlformungselement 22 ist zur Verbesserung eines Strahlprofils des Laserbündels vorgesehen. Ein solches Strahlformungselement 22 kann auch integraler Bestandteil der Laserdiode 16 sein. Die Sendeeinheit 14 weist ein Optikelement 26 auf. Das Optikelement 26 ist als eine Linse 28 ausgebildet. Das Optikelement 26 bildet ein Kollimationsobjektiv, das aus dem Laserstrahl der Laserdiode 16 einen im Wesentlichen parallelen Sendestrahl 80 erzeugt. Grundsätzlich ist es auch denkbar, dass das Strahlformungselement 22 auf eine andere Weise ausgebildet ist oder die Sendeeinheit 14 weitere Strahlformungselemente 22 aufweist. Der Sendestrahl 80 ist in Richtung auf das zu vermessende Messobjekt 78 ausgerichtet. Die Entfernungsmessvorrichtung 10 umfasst ein optisches Fenster 86 durch das der Sendestrahl 80 aus einem Inneren der Entfernungsmessvorrichtung 10 in eine Umgebung austreten kann. Das optische Fenster 86 ist an einem vorderen Ende der Entfernungsmessvorrichtung 10 angeordnet. Die Sendeeinheit 14 ist dabei im Wesentlichen hinter dem optischen Fenster 86 angeordnet.

Die Entfernungsmessvorrichtung 10 weist eine Empfängereinheit 18 auf. Die Empfängereinheit 18 ist dazu vorgesehen, ein von der Sendeeinheit 14 ausgesendetes Messsignal zu detektieren. Ein von der Sendeeinheit 14 ausgesendetes Messsignal, insbesondere in Form des Sendestrahls 80, wird, nachdem es von dem Messobjekt 78 reflektiert und/oder gestreut wird, als rücklaufendes Messsignal von der Empfängereinheit 18 detektiert. Die Entfernungsmessvorrichtung 10 weist ein weiteres optisches Fenster 90 auf. Durch das optische Fenster 90 kann ein von dem Messobjekt 78 rücklaufender Empfangsstrahl 82 in die Entfernungsmessvorrichtung 10 eintreten. Die Empfängereinheit 18 ist hinter dem weiteren optischen Fenster 90 angeordnet. Die Empfängereinheit 18 weist ein Optikelement 30 auf, durch das der Empfangsstrahl 82 geführt wird. Das Optikelement 30 ist als eine Linse 32 ausgebildet. Das Optikelement 30 bündelt den Empfangsstrahl 82. Die Empfängereinheit 18 weist eine Sensoreinheit 20 auf. Die Sensoreinheit 20 ist als eine Fotodiode ausgebildet. Der Empfangsstrahl 82 wird mittels des Optikelements 30 der Empfängereinheit 18 auf eine Messoberfläche der als Fotodiode ausgebildeten Sensoreinheit 20 gebündelt. Dadurch kann mittels der Sensoreinheit 20 ein rücklaufender Empfangsstrahl 82 erfasst werden. Die Sensoreinheit 20 wandelt den rücklaufenden Empfangsstrahl 82 in ein elektrisches Sensorsignal um.

Die Entfernungsmessvorrichtung 10 weist eine Recheneinheit 58 auf. Die Recheneinheit 58 ist als eine Steuer- und Recheneinheit ausgebildet. Die Recheneinheit 58 ist zur Steuerung und Regelung der Entfernungsmessvorrichtung 10 vorgesehen. Die Recheneinheit 58 ist dazu vorgesehen, die Sendeeinheit 14 zu steuern. Insbesondere ist die Recheneinheit 58 dazu vorgesehen, die Laserdiode 16 anzusteuern und zu betreiben. Die Recheneinheit 58 ist weiter dazu vorgesehen, das elektrische Sensorsignal der Sensoreinheit 20 der Empfängereinheit 18 auszuwerten. Durch Auswertung des elektrischen Sensorsignals der Sensoreinheit 20 der Empfängereinheit 18 ermittelt die Recheneinheit 58 einen Abstand zu dem Messobjekt 78.

Die Recheneinheit 58 umfasst eine nicht näher dargestellte Schaltungsanordnung, die unter anderem zumindest auch einen Quarzoszillator zur Bereitstellung der benötigten Frequenzsignale aufweist. Mit diesen Signalen, von denen typischerweise mehrere, mit unterschiedlichen Frequenzen während einer Entfernungsmessung genutzt werden, wird das Messsignal in bekannter Weise moduliert. Der prinzipielle Aufbau einer solchen Schaltungsanordnung ist beispielsweise der DE 198 11 550 A1 zu entnehmen und soll daher hier nicht explizit wiederholt werden.

Zur Entfernungsmessung zwischen der Entfernungsmessvorrichtung 10 und dem Messobjekt 78 wird die Entfernungsmessvorrichtung 10 auf das Messobjekt 78 gerichtet, sodass die optischen Fenster 86, 90 auf das Messobjekt 78 ausgerichtet sind. Die Recheneinheit 58 steuert die Laserdiode 16 der Sendeeinheit 14 an, die einen Laserstrahl ausgibt, der über das Strahlformungselement 22 und das Optikelement 26 in einen parallelen Sendestrahl 80 umgewandelt wird. Der Sendestrahl 80 bildet die Messstrahlung der Entfernungsmessvorrichtung 10. Der Sendestrahl 80 ist durch das optische Fenster 86 in Richtung des Messobjekts 78 gerichtet und wird von dem Messobjekt 78, je nach Beschaffenheit des Messobjekts 78, teilweise reflektiert und/oder teilweise gestreut. Der reflektierte und/oder gestreute Sendestrahl 80 bildet einen zu der Entfernungsmessvorrichtung 10 zurücklaufenden Empfangsstrahl 82. Der zurücklaufende Empfangsstrahl 82 tritt durch das optische Fenster 90 wieder in die Entfernungsmessvorrichtung 10 ein und wird über das Optikelement 30 auf die Sensoreinheit 20 gebündelt. Die als Fotodiode ausgebildete Sensoreinheit 20 wandelt den auf sie gebündelten Empfangsstrahl 82 in ein elektrisches Sensorsignal um, das von der Recheneinheit 58 verarbeitet wird. Die Recheneinheit 58 ermittelt aus dem Sensorsignal, das durch den rücklaufenden Empfangsstrahl 82 ausgelöst wird, eine Distanz zwischen der Entfernungsmessvorrichtung 10 und dem Messobjekt 78. Dabei ermittelt die Recheneinheit 58 insbesondere aus einer dem rücklaufenden Empfangsstrahl 82 aufgeprägten Phasenverschiebung im Vergleich zu dem ausgesendeten Sendestrahl 80 eine Distanz zwischen der Entfernungsmessvorrichtung 10 und dem Messobjekt 78. Eine Ermittlung der Distanz entspricht dabei einem Verfahren, das aus dem Stand der Technik, beispielsweise der DE 102 32 878 A1, bekannt ist, und soll deswegen hier nicht näher beschrieben werden. Dabei haben verschiedene Umwelt- und/oder Anwendungseinflüsse einen Einfluss auf die Genauigkeit der Distanzmessung. Dabei haben insbesondere eine Relativbewegung der Entfernungsmessvorrichtung 10 sowie verschiedene optische Einflüsse, wie Helligkeit, Kontrast und/oder ein Fremdlicht 84, und/oder eine Messdistanz einen Einfluss auf die Genauigkeit der Distanzmessung mittels der Entfernungsmessvorrichtung 10. Die Recheneinheit 58 ist dazu vorgesehen, sich auf die Genauigkeit der Distanzmessung auswirkende Messgenauigkeitseinflusskenngröße zu erfassen und auszuwerten.

Die Entfernungsmessvorrichtung 10 weist eine Sensoreinheit 34 auf. Die Sensoreinheit 34 ist zur Erfassung von zumindest einer Messgenauigkeitseinflusskenngröße vorgesehen. Die Sensoreinheit 34 ist als eine optische Sensoreinheit ausgebildet. Die Sensoreinheit 34 ist als eine optische Kameraeinheit 36 ausgebildet. Dabei ist es denkbar, dass die als optische Kameraeinheit 36 ausgebildete Sensoreinheit 34 zur Distanzmessung mittels der Entfernungsmessvorrichtung 10 vorhanden ist oder dass die als optische Kameraeinheit 36 ausgebildete Sensoreinheit 34 als zusätzlicher Sensor in die Entfernungsmessvorrichtung 10 integriert ist, der lediglich zur Erfassung von Messgenauigkeitseinflusskenngrößen vorgesehen ist. Die als optische Kameraeinheit 36 ausgebildete Sensoreinheit 34 ist insbesondere dazu vorgesehen, ein Bild einer Umgebung der Entfernungsmessvorrichtung zu erfassen. Die Sensoreinheit 34 ist mit der Recheneinheit 58 über entsprechende Leitungen gekoppelt, sodass von der Sensoreinheit 34 erfasste Bilder auf der Recheneinheit 58 gespeichert und ausgewertet werden können. Die Sensoreinheit 34 umfasst ein Detektorelement 42. Das Detektorelement 42 ist als ein optoelektronischer Sensor 44 ausgebildet. Die Sensoreinheit 34 umfasst ein Optikelement 38. Das Optikelement 38 ist als eine Linse 40 ausgebildet, die ein eintreffendes Locht auf das Detektorelement 42 der Sensoreinheit 34 bündelt. Die Entfernungsmessvorrichtung 10 weist ein weiteres optisches Fenster 88 auf. Das weitere optische Fenster 88 ist auf der gleichen Seite der Entfernungsmessvorrichtung 10 angeordnet wie die beiden anderen optischen Fenster 86, 90. Die Sensoreinheit 34 ist hinter dem weiteren optischen Fenster 88 angeordnet. Durch das optische Fenster 88 kann Licht in das Innere der Entfernungsmessvorrichtung 10 einfallen, wobei die Sensoreinheit 34 über das Optikelement 38 und das Detektorelement 42 ein Bild der Umgebung erfassen kann. Die als optische Kameraeinheit 36 ausgebildete Sensoreinheit 34 ist dazu vorgesehen, zumindest eine als Fremdlicht 84, eine als Kontrast, eine als Helligkeit, eine als Bildhistogramm und/oder eine als Bewegungskenngröße ausgebildete Messgenauigkeitseinflusskenngröße zu erfassen.

Die Entfernungsmessvorrichtung 10 weist eine Sensoreinheit 46 auf. Die Sensoreinheit 46 ist als eine Inertialsensoreinheit 48 ausgebildet. Die Sensoreinheit 46 ist dazu vorgesehen, eine Bewegung der Entfernungsmessvorrichtung 10 zu erfassen. Die Sensoreinheit 46 ist zur Bewegungsdetektion vorgesehen. Die Sensoreinheit 46 weist ein erstes Inertialsensorelement 50 auf. Das erste Inertialsensorelement 50 ist als ein Beschleunigungssensor 52 ausgebildet. Der Beschleunigungssensor 52 ist dazu vorgesehen, eine Beschleunigung der Entfernungsmessvorrichtung 10 zu erfassen. Dabei weist der Beschleunigungssensor 52 drei jeweils orthogonal aufeinander stehende Translationssensoren auf, sodass der Beschleunigungssensor 52 eine Bewegung in allen drei Raumachsen erfassen kann. Die Sensoreinheit 46, die als Inertialsensoreinheit 48 ausgebildet ist, weist ein zweites Inertialsensorelement 54 auf. Das zweite Inertialsensorelement 54 ist als ein Drehratensensor 56 ausgebildet. Der Drehratensensor 56 ist dazu vorgesehen, eine Rotationsgeschwindigkeit der Entfernungsmessvorrichtung 10 um die drei orthogonal aufeinander stehenden Raumachsen zu erfassen.

Dazu weist der Drehratensensor 56 drei orthogonal aufeinander stehende gyroskopische Sensorelemente auf. Grundsätzlich ist es auch denkbar, dass die Sensoreinheit 46 weitere Inertialsensorelemente 50, 54 aufweist. Die als eine Inertialsensoreinheit 48 ausgebildete Sensoreinheit 46 ist dazu vorgesehen, zumindest eine als Bewegungskenngröße, insbesondere als eine Geschwindigkeit und/oder eine Beschleunigung, ausgebildete Messgenauigkeitseinflusskenngröße zu erfassen. Die Sensoreinheit 46 ist über eine Leitung mit der Recheneinheit 58 gekoppelt und gibt so die erfasste Bewegungskenngröße an die Recheneinheit 58 weiter, die diese Bewegungskenngröße dann verarbeitet.

Die Recheneinheit 58 ist dazu vorgesehen die von den Sensoreinheiten 20, 34, 46 übermittelten Messgenauigkeitseinflusskenngrößen auszuwerten. Dabei ist die Recheneinheit 58 dazu vorgesehen, das Sensorsignal der Sensoreinheit 20 als Messgenauigkeitseinflusskenngröße auszuwerten. Die Recheneinheit 58 ist dazu vorgesehen, die von der als optische Kameraeinheit 36 ausgebildeten Sensoreinheit 34 an die Recheneinheit 58 übermittelten Bilder auszuwerten und daraus Messgenauigkeitseinflusskenngrößen abzuleiten. Die Recheneinheit 58 wertet ein Fremdlicht 84, einen Kontrast, eine Helligkeit, ein Bildhistogramm eines von der Sensoreinheit 34 erfassten Bilds als Messgenauigkeitseinflusskenngröße aus. Des Weiteren wertet die Recheneinheit 58 eine Bewegungskenngröße, die die Recheneinheit 58 durch Vergleich zweier unterschiedlicher von der Sensoreinheit 34 erfasster Bilder ermittelt, als Messungenauigkeitskenngröße. Die Recheneinheit 58 ist dazu vorgesehen, die von der als Inertialsensoreinheit 48 ausgebildeten Sensoreinheit 46 ausgegebenen Bewegungskenngrößen als Messgenauigkeitseinflusskenngrößen auszuwerten.

Die Entfernungsmessvorrichtung 10 weist unterschiedliche Messgenauigkeitsklassen auf. In den unterschiedlichen Messgenauigkeitsklassen der Entfernungsmessvorrichtung 10 ist eine Abweichung der von der Entfernungsmessvorrichtung 10 gemessenen Distanz zu dem Messobjekt 78 zu einer tatsächlichen Distanz zu dem Messobjekt 78 unterschiedlich groß. Die Messgenauigkeitsklassen sind in der Recheneinheit 58 hinterlegt. Die unterschiedlichen Messgenauigkeitsklassen bilden dabei jeweils eine Abweichung aus, die eine Distanzmessung mittels der Entfernungsmessvorrichtung 10 aufweist. In einer ersten Messgenauigkeitsklasse weist die gemessene Distanz eine Abweichung von plus/minus einem Millimeter von der tatsächlichen Distanz auf. In einer zweiten Messgenauigkeitsklasse weist die gemessene Distanz eine Abweichung von plus/minus einem Zentimeter von der tatsächlichen Distanz auf. In einer dritten Messgenauigkeitsklasse weist die gemessene Distanz eine Abweichung von plus/minus einem Dezimeter von der tatsächlichen Distanz auf. Grundsätzlich ist es auch denkbar, dass auf der Recheneinheit 58 weitere Messgenauigkeitsklassen hinterlegt sind, die andere Abweichungen haben, die zwischen den Abweichungen der oben genannten Messgenauigkeitsklassen liegen bzw. größer oder kleiner sind als die Abweichungen der angegebenen Messgenauigkeitsklassen.

Die Entfernungsmessvorrichtung 10 weist eine Ausgabeeinheit 60 auf. Die Ausgabeeinheit 60 ist dazu vorgesehen, dass über sie Informationen und Anweisungen an einen Bediener ausgegeben werden können. Die Ausgabeeinheit 60 ist zur optischen, akustischen und/oder haptischen Ausgabe von Informationen und Anweisungen vorgegeben. Die Ausgabeeinheit 60 ist von der Recheneinheit 58 angesteuert. Über die Ausgabeeinheit 60 kann die Recheneinheit 58 visuelle Informationen an den Bediener ausgeben. Die Ausgabeeinheit 60 weist ein Anzeigeelement 62 auf. Das Anzeigeelement 62 ist dazu vorgesehen, dem Bediener ein optisches Signal auszugeben. Das Anzeigeelement 62 ist als ein Display 64 ausgebildet. Grundsätzlich ist es auch denkbar, dass das Anzeigeelement 62 als eine einzelne LED oder eine Reihe von LEDs ausgebildet ist, die ein visuelles Signal an den Bediener ausgeben können. In einem Betrieb ist die Ausgabeeinheit 60 insbesondere dazu vorgesehen, ein Ergebnis einer Distanzmessung visuell an den Bediener auszugeben. Die Ausgabeeinheit 60 weist ein akustisches Ausgabeelement 66 auf. Das akustische Ausgabeelement 66 ist als ein Lautsprecher 68 ausgebildet. Das akustische Ausgabeelement 66 ist dazu vorgesehen, akustische Signale an den Bediener auszugeben. Dabei ist es beispielsweise denkbar, dass über das akustische Ausgabeelement 66 eine Sprachausgabe erfolgt und beispielsweise ein Ergebnis einer Distanzmessung akustisch an den Bediener ausgegeben wird. Es ist auch denkbar, dass über die akustische Ausgabeelement 66 beispielsweise ein akustisches Signal ausgegeben wird, wenn eine Distanzmessung abgeschlossen ist. Die Ausgabeeinheit 60 weist ein haptisches Ausgabeelement 70 auf. Das haptische Ausgabeelement 70 ist als ein Vibrationselement 72 ausgebildet. Grundsätzlich ist es auch denkbar, dass das haptische Ausgabeelement 70 als ein anderes, dem Fachmann als sinnvoll erscheinendes Ausgabeelement ausgebildet ist. Über das haptische Ausgabeelement 70 können haptische Signale an den Bediener ausgegeben werden. So ist es beispielsweise denkbar, dass das haptische Ausgabeelement 70 durch Vibrieren auf eine erfolgreiche Distanzmessung hinweist.

Die Entfernungsmessvorrichtung 10 weist eine Bedieneinheit 74 auf. Die Bedieneinheit 74 ist dazu vorgesehen, dass ein Bediener verschiedene Einstellungen an der Entfernungsmessvorrichtung 10 vornehmen kann. Die Bedieneinheit 74 ist über eine entsprechende Leitung mit der Recheneinheit 58 gekoppelt. Dadurch kann der Bediener die Recheneinheit 58 bzw. die Entfernungsmessvorrichtung 10 über die Bedieneinheit 74 bedienen. So kann ein Bediener über die Bedieneinheit 74 beispielsweise eine Art der Anzeige eines Messergebnisses mittels der Ausgabeeinheit 60 auswählen oder die Entfernungsmessvorrichtung 10 ein- bzw. ausschalten. Über die Bedieneinheit 74 kann der Bediener eine gewünschte Messgenauigkeitsklasse einstellen, mit der er eine Distanzmessung vornehmen möchte. Die Bedieneinheit 74 weist dazu mehrere Bedienelemente 76 auf. Die Bedienelemente 76 können dabei als Druckknöpfe, als Drehknöpfe, als Taster, berührungsempfindliche Fläche oder als andere, dem Fachmann als sinnvoll erscheinende Bedienelemente 76 ausgebildet sein. Dabei kann den verschiedenen Messgenauigkeitsklassen ein Wert, wie beispielsweise "mm", "cm" oder "dm", zugewiesen und entsprechend der Auswahl des Bedieners über die Ausgabeeinheit 60 ausgegeben werden. Grundsätzlich ist es auch denkbar, dass den unterschiedlichen Messgenauigkeitsklassen Beschreibungen wie "fein", "mittel" und "grob" zugeordnet sind, die ebenfalls über die Ausgabeeinheit 60 ausgegeben werden können.

Die Recheneinheit 58 ist dazu vorgesehen, die von den Sensoreinheiten 20, 34, 46 an die Recheneinheit 58 übermittelten Messgenauigkeitseinflusskenngrößen zu verarbeiten. In Abhängigkeit der verarbeiteten Messgenauigkeitseinflusskenngrößen ermittelt die Recheneinheit 58 eine wahrscheinliche Abweichung der gemessenen Distanz von einer tatsächlichen Distanz des Messobjekts 78 zu der Entfernungsmessvorrichtung 10. In Abhängigkeit der verarbeiteten Messgenauigkeitseinflusskenngrößen ermittelt die Recheneinheit 58, in welcher Messgenauigkeitsklasse die Entfernungsmessvorrichtung 10 bei den aktuellen Bedingungen betrieben werden kann. Die Recheneinheit 58 ist dazu vorgesehen, anhand der verarbeiteten Messgenauigkeitseinflusskenngrößen eine Handlungsanweisung zu ermitteln. Die Recheneinheit 58 ist dazu vorgesehen, anhand der verarbeiteten Messgenauigkeitseinflusskenngrößen und der eingestellten Messgenauigkeitsklasse eine Handlungsanweisung zu ermitteln. Dabei ermittelt die Recheneinheit 58 Handlungsanweisungen an den Bediener, mittels denen ein Bediener eine Distanzmessung verbessern kann und/oder eine gewünschte Messgenauigkeitsklasse erreichen kann. Über die Ausgabeeinheit 60 gibt die Recheneinheit 58 die ermittelte Handlungsanweisung an den Bediener aus.

Im Folgenden wird schematisch ein erfindungsgemäßes Verfahren zum Betrieb der oben aufgeführten, als Laserentfernungsmessvorrichtung 12 ausgebildeten Entfernungsmessvorrichtung 10 beschrieben. In einem Normalbetrieb wird über den über die Sendeeinheit 14 ausgegebenen Sendestrahl 80 und über den von dem Messobjekt 78 reflektierten und gestreuten Empfangsstrahl 82, der über die Empfängereinheit 18 aufgenommen wird, von der Recheneinheit 58 eine Distanz zwischen der Entfernungsmessvorrichtung 10 und dem Messobjekt 78 ermittelt. Die gemessene Distanz wird von der Recheneinheit 58 über die Ausgabeeinheit 60 ausgegeben.

In einem Verfahrensschritt 92 wird eine Messgenauigkeitseinflusskenngröße mittels der Sensoreinheit 20 ermittelt. Über die Sensoreinheit 20, mittels der die Distanzmessung der Entfernungsmessvorrichtung 10 durchgeführt wird, wird ermittelt, wie groß die zu messende Distanz ist und der Wert wird als Messgenauigkeitseinflusskenngröße von der Recheneinheit 58 erfasst. Insbesondere ein Rauschen (SNR) der Sensoreinheit 20 wird von der Recheneinheit 58 als Messgenauigkeitseinflusskenngröße erfasst.

In einem Verfahrensschritt 98 wird eine Messgenauigkeitseinflusskenngröße mittels der Sensoreinheit 34 ermittelt. In dem Verfahrensschritt 98 wird mittels der als optische Kameraeinheit 36 ausgebildeten Sensoreinheit 34 ein in der Umgebung vorhandenes Fremdlicht 84 als Messgenauigkeitseinflusskenngröße ermittelt. Die Recheneinheit 58 wertet dabei ein von der Sensoreinheit 34 erfasstes Bild aus und ermittelt dabei ein vorhandenes Fremdlicht 84. Insbesondere werden Farben, die gleich oder ähnlich den Laserwellen des von der Laserdiode 16 ausgegebenen Laserstrahls sind, als Messgenauigkeitseinflusskenngröße ermittelt.

In einem Verfahrensschritt 100 wird eine Messgenauigkeitseinflusskenngröße mittels der Sensoreinheit 34 ermittelt. In dem Verfahrensschritt 100 wird eine als Kontrast ausgebildete Messgenauigkeitseinflusskenngröße mittels der als optische Kameraeinheit 36 ausgebildeten Sensoreinheit 34 ermittelt. Die Recheneinheit 58 wertet dabei ein von der Sensoreinheit 34 erfasstes Bild aus und ermittelt dabei den Kontrast. Über den ermittelten Kontrast als Messgenauigkeitseinflusskenngröße kann die Recheneinheit 58 die Lichtverhältnisse in der Umgebung der Entfernungsmessung ermitteln.

In einem Verfahrensschritt 102 wird eine Messgenauigkeitseinflusskenngröße mittels der Sensoreinheit 34 ermittelt. In dem Verfahrensschritt 102 wird eine als Helligkeit ausgebildete Messgenauigkeitseinflusskenngröße mittels der als optische Kameraeinheit 36 ausgebildeten Sensoreinheit 34 ermittelt. Die Recheneinheit 58 wertet dabei ein von der Sensoreinheit 34 erfasstes Bild aus und ermittelt dabei die Helligkeit in der Umgebung. Durch den Verfahrensschritt 102 kann die Recheneinheit 58 eine Intensität des Umgebungslichts, in dem die Entfernungsmessung erfolgt, als Messgenauigkeitseinflusskenngröße ermitteln und in ein Verhältnis zu einer Intensität des Laserstrahls der Laserdiode 16 zur Entfernungsmessung setzen und so insbesondere ein Verhältnis des Messsignals zum "Umgebungsrauschen" und eine mögliche "Überstrahlung" des Sendestrahls 80 ermitteln.

In einem Verfahrensschritt 104 wird eine Messgenauigkeitseinflusskenngröße mittels der Sensoreinheit 34 ermittelt. In dem Verfahrensschritt 104 wird eine als Bildhistogramm ausgebildete Messgenauigkeitseinflusskenngröße mittels der als optische Kameraeinheit 36 ausgebildeten Sensoreinheit 34 ermittelt. Die Recheneinheit 58 wertet dabei ein von der Sensoreinheit 34 erfasstes Bild aus und ermittelt dabei eine Verteilung von Helligkeitswerten bzw. Farbwerten im Bild.

Dadurch kann die Recheneinheit 58 detailreiche Informationen des erfassten Bilds der Sensoreinheit 34 nutzen, um eine präzise Bestimmung der erreichbaren Messgenauigkeitsklasse zu erreichen.

In einem Verfahrensschritt 106 wird eine Messgenauigkeitseinflusskenngröße mittels der Sensoreinheit 34 ermittelt. In dem Verfahrensschritt 106 wird eine als Bewegungskenngröße ausgebildete Messgenauigkeitseinflusskenngröße mittels der als optische Kameraeinheit 36 ausgebildeten Sensoreinheit 34 und der Recheneinheit 58 ermittelt. Die Recheneinheit 58 wertet dabei mehrere von der Sensoreinheit 34 erfasste Bilder aus. Dabei kann es sich um unmittelbar hintereinander erfasste Bilder handeln oder um Bilder, die in einem gewissen Abstand zueinander aufgenommen wurden. Dabei ermittelt die Recheneinheit 58 durch Vergleich der zumindest zwei Bilder eine Bewegung der Entfernungsmessvorrichtung 10 anhand der Änderungen in den Bildern. Dabei verwendet die Recheneinheit 58 beispielsweise eine Pixelverschiebung oder eine Positionsänderung eines Merkmals, wie beispielsweise einer Kante, einer Struktur oder eines Musters, in den zumindest zwei ausgewerteten Bildern zur Ermittlung einer Bewegungskenngröße. Die Bewegungskenngröße bildet eine Bewegung der Entfernungsmessvorrichtung 10 ab. Dadurch kann die Recheneinheit 58 eine Verschiebung der Entfernungsmessvorrichtung 10 relativ zu dem Messobjekt 78 ermitteln und als Messgenauigkeitseinflusskenngröße erfassen.

In einem Verfahrensschritt 108 wird eine Messgenauigkeitseinflusskenngröße mittels der Sensoreinheit 46 ermittelt. In dem Verfahrensschritt 108 wird eine als Bewegungskenngröße ausgebildete Messgenauigkeitseinflusskenngröße mittels der als Inertialsensoreinheit 48 ausgebildeten Sensoreinheit 46 ermittelt. Dabei ermittelt die Recheneinheit 58 durch die Sensorsignale der Inertialsensorelemente 50, 54 eine Bewegung der Entfernungsmessvorrichtung 10. Dadurch kann die Recheneinheit 58 eine Bewegung der Entfernungsmessvorrichtung 10 relativ zu dem Messobjekt 78 oder ein Verwackeln der Entfernungsmessvorrichtung 10 ermitteln und als Messgenauigkeitseinflusskenngröße erfassen.

In einem Verfahrensschritt 94 bestimmt die Recheneinheit 58 in Abhängigkeit von der in den Verfahrensschritten 92, 98, 100, 102, 104, 106, 108 ermittelten Messgenauigkeitseinflusskenngröße eine erreichbare Messgenauigkeitsklasse. Dabei bestimmt die Recheneinheit 58 aus allen zur Verfügung stehenden, in den Verfahrensschritten 92, 98, 100, 102, 104, 106, 108 ermittelten Messgenauigkeitseinflusskenngrößen die erreichbare Messgenauigkeitsklasse. Grundsätzlich ist es dabei auch denkbar, dass einzelne in den Verfahrensschritten 92, 98, 100, 102, 104, 106, 108 ermittelten Messgenauigkeitseinflusskenngrößen bevorzugt zur Bestimmung der erreichbaren Messgenauigkeitsklasse verwendet werden. Die erreichbare Messgenauigkeit oder Messgenauigkeitsklasse kann dem Bediener über die Ausgabeeinheit 60 mitgeteilt werden.

In einem Verfahrensschritt 96 wird in Abhängigkeit von den von der Recheneinheit 58 erfassten Messgenauigkeitseinflusskenngrößen und der ermittelten erreichbaren Messgenauigkeitsklasse zumindest eine Handlungsanweisung ermittelt. Grundsätzlich ist es auch denkbar, dass lediglich aufgrund der von der Recheneinheit 58 erfassten Messgenauigkeitseinflusskenngrößen oder der ermittelten erreichbaren Messgenauigkeitsklasse eine Handlungsanweisung ermittelt wird. Die Handlungsanweisung wird dabei vorzugsweise auch in Abhängigkeit der eingestellten, gewünschten Messgenauigkeitsklasse ausgegeben. Ist eine gewisse Messgenauigkeitsklasse von dem Bediener eingestellt und weist eine aus den Messgenauigkeitseinflusskenngrößen ermittelte erreichbare Messgenauigkeitsklasse eine größere Abweichung beim Messergebnis auf als die eingestellte Messgenauigkeitsklasse, wird in dem Verfahrensschritt 96 eine Handlungsanweisung für den Bediener ermittelt, wie er die gewünschte Messgenauigkeitsklasse erreichen kann. Die ermittelte Handlungsanweisung wird mittels der Ausgabeeinheit 60 an den Bediener ausgegeben. In der Handlungsanweisung wird dem Bediener übermittelt, wenn er eine gewünschte Messgenauigkeitsklasse nicht erreichen kann und welche Handlungen der Bediener vornehmen kann, um die gewünschte Messgenauigkeitsklasse zu erreichen. Ist von dem Bediener keine gewünschte Messgenauigkeitsklasse vorgegeben, wird eine Handlungsanweisung ermittelt, die angibt, was die aktuelle erreichbare Messgenauigkeitsklasse ist und wie die nächstgenauere Messgenauigkeitsklasse erreicht werden kann. Ist keine Messgenauigkeitsklasse vorgegeben, so kann auch eine Handlungsanweisung ermittelt und ausgegeben werden, die dem Bediener Vorschläge unterbreitet, wie der Bediener die Messbedingungen verbessern kann. Die Handlungsanweisungen umfassen dabei Aufforderungen, die Messbedingungen durch Veränderung der Umgebung, beispielsweise durch Veränderung der Lichtverhältnisse, durch Veränderung der Bedienung der Entfernungsmessvorrichtung 10, beispielsweise durch ruhigeres Halten der Entfernungsmessvorrichtung 10, oder durch Verwendung zusätzlicher Geräte, wie beispielsweise durch Verwendung eines Reflektors zu verbessern.

In Abhängigkeit der erfassten Messgenauigkeitseinflusskenngrößen und der daraus ermittelten Ursache von Messstörungen und Messungenauigkeiten wird eine über die Ausgabeeinheit 60 ausgegebene Handlungsanweisung ausgewählt. Dabei sind verschiedene Handlungsanweisungen auf der Recheneinheit 58 hinterlegt. Die hinterlegten Handlungsanweisungen werden je nach erfasster Messgenauigkeitseinflusskenngröße ausgewählt und über die Ausgabeeinheit 60 ausgegeben. Dabei wird eine Handlungsanweisung, die eine voraussichtlich größte Verbesserung des Messergebnisses ermöglicht, also die Handlungsanweisung, die die entsprechende Messgenauigkeitseinflusskenngröße am entscheidendsten verbessert, zuerst ausgegeben. Die Handlungsanweisungen werden entsprechend ihrer Priorisierung nach Einfluss auf das Messergebnis ausgegeben. Grundsätzlich ist es auch denkbar, dass die ermittelten Handlungsanweisungen im Wesentlichen zeitgleich über das Display 64 der Ausgabeeinheit 60 ausgegeben werden. Es ist generell denkbar, dass die Handlungsanweisungen rein visuell, rein akustisch oder sowohl akustisch als auch visuell über die Ausgabeeinheit 60 an den Bediener ausgegeben werden.

Auf der Recheneinheit 58 hinterlegte und über die Ausgabeeinheit 60 ausgegebene Handlungsanweisungen können beispielsweise folgender, nicht abschließender Auflistung entnommen werden:
- "Bitte X weitere Messungen durchführen."
- "Bitte die Messzeit verlängern."
- "Bitte das Gerät langsamer bewegen."
- "Bitte ein Stativ zur Messung verwenden."
- "Bitte die Beleuchtungssituation des Messobjekts verändern."
- "Bitte verwenden Sie einen Reflektor."
- "Bitte verringern Sie den Abstand zum Messobjekt."

Diese Handlungsanweisungen können dabei jeweils zusätzliche Informationen beinhalten, beispielsweise wie eine Beleuchtungssituation, beispielsweise durch Abschatten, verbessert werden kann. Ist eine gewünschte Messgenauigkeitsklasse erreicht, so gibt die Ausgabeeinheit 60 ein entsprechendes Signal an den Bediener aus. Dabei kann das Signal insbesondere ein über das haptische Ausgabeelement 70 ausgegebenes haptisches Signal sein, wie beispielsweise ein Vibrieren.

## Patentansprüche

1. Verfahren zu einem Betrieb einer handgehaltenen als Laserentfernungsmessvorrichtung (12) ausgebildeten Entfernungsmessvorrichtung (10), wobei in zumindest einem Verfahrensschritt (92, 98, 100, 102, 104, 106, 108) zumindest eine Messgenauigkeitseinflusskenngröße mittels einer Sensoreinheit (20, 34, 46) der Entfernungsmessvorrichtung (10) erfasst wird, wobei in zumindest einem Verfahrensschritt (94) in Abhängigkeit von der Messgenauigkeitseinflusskenngröße mittels einer Recheneinheit (58) der Entfernungsmessvorrichtung (10) eine erreichbare Messgenauigkeitsklasse bestimmt wird, wobei in zumindest einem Verfahrensschritt (96) in Abhängigkeit von der zumindest einen erfassten Messgenauigkeitseinflusskenngröße und/oder der erreichbaren Messgenauigkeitsklasse zumindest eine Handlungsanweisung in Form eines optischen, akustischen und/oder haptischen Signals, insbesondere mittels einer Ausgabeeinheit (60) der Entfernungsmessvorrichtung (10), ausgegeben wird, die einem Benutzer eine Anweisung gibt, wie er die Laserentfernungsmessvorrichtung (12) zu verwenden hat, um eine Messgenauigkeitsklasse zu erreichen, **dadurch gekennzeichnet, dass** in zumindest einem Verfahrensschritt (106) zumindest eine als Bewegungskenngröße ausgebildete Messgenauigkeitseinflusskenngröße mittels einer als optische Kameraeinheit (36) ausgebildeten Sensoreinheit (34) der Entfernungsmessvorrichtung (10) erfasst wird, wobei die Bewegungskenngröße eine Kenngröße ist, die eine Bewegung der Entfernungsmessvorrichtung (10) relativ zu ihrer Umgebung beschreibt.

2. Verfahren nach Anspruch 1, **dadurch gekennzeichnet, dass** in zumindest einem Verfahrensschritt (98) zumindest eine als Fremdlicht (84) ausgebildete weitere Messgenauigkeitseinflusskenngröße mittels der als optische Kameraeinheit (36) ausgebildeten Sensoreinheit (34) erfasst wird.

3. Verfahren nach einem der vorhergehenden Ansprüche, **dadurch gekennzeichnet, dass** in zumindest einem Verfahrensschritt (100) zumindest eine als Kontrast ausgebildete weitere Messgenauigkeitseinflusskenngröße mittels der als optische Kameraeinheit (36) ausgebildeten Sensoreinheit (34) erfasst wird.

4. Verfahren nach einem der vorhergehenden Ansprüche, **dadurch gekennzeichnet, dass** in zumindest einem Verfahrensschritt (102) zumindest eine als Helligkeit ausgebildete weitere Messgenauigkeitseinflusskenngröße mittels der als optische Kameraeinheit (36) ausgebildeten Sensoreinheit (34) erfasst wird.

5. Verfahren nach einem der vorhergehenden Ansprüche, **dadurch gekennzeichnet, dass** in zumindest einem Verfahrensschritt (104) zumindest eine als Bildhistogramm ausgebildete weitere Messgenauigkeitseinflusskenngröße mittels der als optische Kameraeinheit (36) ausgebildeten Sensoreinheit (34) erfasst wird.

6. Verfahren nach einem der vorhergehenden Ansprüche, **dadurch gekennzeichnet, dass** in zumindest einem Verfahrensschritt (108) zumindest eine als Bewegungskenngröße ausgebildete weitere Messgenauigkeitseinflusskenngröße mittels einer als Inertialsensoreinheit (48) ausgebildeten Sensoreinheit (46) der Entfernungsmessvorrichtung (10) erfasst wird.

7. Handgehaltene Laserentfernungsmessvorrichtung (12), die eine als Laserentfernungsmessvorrichtung (12) ausgebildete Entfernungsmessvorrichtung (10) ist, die gemäß einem Verfahren nach einem der vorhergehenden Ansprüche betreibbar ist, mit zumindest einer Sensoreinheit (20, 34, 46), die zu einer Erfassung zumindest einer Messgenauigkeitseinflusskenngröße vorgesehen ist, mit zumindest einer Recheneinheit (58), die dazu vorgesehen ist, die zumindest eine Messgenauigkeitseinflusskenngröße zu verarbeiten, und mit zumindest einer optischen, akustischen und/oder haptischen Ausgabeeinheit (60), wobei in Abhängigkeit von der zumindest einen erfassten Messgenauigkeitseinflusskenngröße zumindest eine Handlungsanweisung in Form eines optischen, akustischen und/oder haptischen Signals mittels der Ausgabeeinheit (60) ausgebbar ist, die einem Benutzer eine Anweisung gibt, wie er die Laserentfernungsmessvorrichtung (12) zu verwenden hat, um eine Messgenauigkeitsklasse zu erreichen, **dadurch gekennzeichnet, dass** die Messgenauigkeitseinflusskenngröße als Bewegungskenngröße ausgebildet ist und mittels einer als optische Kameraeinheit (36) ausgebildeten Sensoreinheit (34) der Entfernungsmessvorrichtung (10) erfassbar ist, wobei die Bewegungskenngröße eine Kenngröße ist, die eine Bewegung der Entfernungsmessvorrichtung (10) relativ zu ihrer Umgebung beschreibt.

8. Handgehaltene Laserentfernungsmessvorrichtung nach Anspruch 7, **gekennzeichnet durch** die als die optische Kameraeinheit (36) ausgebildete Sensoreinheit (34), die dazu vorgesehen ist, zumindest eine als Fremdlicht (84), als Kontrast, als Helligkeit, als Bildhistogramm und/oder als die Bewegungskenngröße ausgebildete weitere Messgenauigkeitseinflusskenngröße zu erfassen.

9. Handgehaltene Laserentfernungsmessvorrichtung nach Anspruch 7 oder 8,
**gekennzeichnet durch** zumindest eine als eine Inertialsensoreinheit (48) ausgebildete Sensoreinheit (46), die dazu vorgesehen ist, zumindest eine als Bewegungskenngröße, insbesondere als eine Geschwindigkeit und/oder eine Beschleunigung, ausgebildete weitere Messgenauigkeitseinflusskenngröße zu erfassen.

## Claims

1. Method for operating a hand-held distance measuring device (10) designed as a laser distance measuring device (12), wherein, in at least one method step (92, 98, 100, 102, 104, 106, 108), at least one measurement accuracy influencing characteristic variable is captured by means of a sensor unit (20, 34, 46) of the distance measuring device (10), wherein, in at least one method step (94), an achievable measurement accuracy class is determined on the basis of the measurement accuracy influencing characteristic variable by means of a computing unit (58) of the distance measuring device (10), wherein, in at least one method step (96), at least one instruction is output in the form of an optical, acoustic and/or haptic signal on the basis of the at least one captured measurement accuracy influencing characteristic variable and/or the achievable measurement accuracy class, in particular by means of an output unit (60) of the distance measuring device (10), and gives a user an instruction on how to use the laser distance measuring device (12) to achieve a measurement accuracy class, **characterized in that**, in at least one method step (106), at least one measurement accuracy influencing characteristic variable designed as a movement characteristic variable is captured by means of a sensor unit (34), designed as an optical camera unit (36), of the distance measuring device (10), wherein the movement characteristic variable is a characteristic variable that describes a movement of the distance measuring device (10) relative to its environment.

2. Method according to Claim 1, **characterized in that**, in at least one method step (98), at least one further measurement accuracy influencing characteristic variable designed as extraneous light (84) is captured by means of the sensor unit (34) designed as an optical camera unit (36).

3. Method according to one of the preceding claims, **characterized in that**, in at least one method step (100), at least one further measurement accuracy influencing characteristic variable designed as contrast is captured by means of the sensor unit (34) designed as an optical camera unit (36).

4. Method according to one of the preceding claims, **characterized in that**, in at least one method step (102), at least one further measurement accuracy influencing characteristic variable designed as brightness is captured by means of the sensor unit (34) designed as an optical camera unit (36).

5. Method according to one of the preceding claims, **characterized in that**, in at least one method step (104), at least one further measurement accuracy influencing characteristic variable designed as an image histogram is captured by means of the sensor unit (34) designed as an optical camera unit (36).

6. Method according to one of the preceding claims, **characterized in that**, in at least one method step (108), at least one further measurement accuracy influencing characteristic variable designed as a movement characteristic variable is captured by means of a sensor unit (46), designed as an inertial sensor unit (48), of the distance measuring device (10).

7. Hand-held laser distance measuring device (12), which is a distance measuring device (10) designed as a laser distance measuring device (12), which can be operated according to a method according to one of the preceding claims, having at least one sensor unit (20, 34, 46) which is provided for capturing at least one measurement accuracy influencing characteristic variable, having at least one computing unit (58) which is provided for processing the at least one measurement accuracy influencing characteristic variable, and having at least one optical, acoustic and/or haptic output unit (60), wherein at least one instruction can be output in the form of an optical, acoustic and/or haptic signal on the basis of the at least one captured measurement accuracy influencing characteristic variable by means of the output unit (60) and gives a user an instruction on how to use the laser distance measuring device (12) to achieve a measurement accuracy class, **characterized in that** the measurement accuracy influencing characteristic variable is designed as a movement characteristic variable and can be captured by means of a sensor unit (34), designed as an optical camera unit (36), of the distance measuring device (10), wherein the movement characteristic variable is a characteristic variable that describes a movement of the distance measuring device (10) relative to its environment.

8. Hand-held laser distance measuring device according to Claim 7, **characterized by** the sensor unit (34) which is designed as the optical camera unit (36) and is provided for capturing at least one further measurement accuracy influencing characteristic variable designed as extraneous light (84), as contrast, as brightness, as an image histogram and/or as the movement characteristic variable.

9. Hand-held laser distance measuring device according to Claim 7 or 8, **characterized by** at least one sensor unit (46) which is designed as an inertial sensor unit (48) and is provided for capturing at least one further measurement accuracy influencing characteristic variable designed as a movement characteristic variable, in particular as a speed and/or an acceleration.

## Revendications

1. Procédé pour faire fonctionner un dispositif de télémétrie (10) portatif et réalisé sous la forme d'un dispositif de télémétrie à laser (12), au moins une grandeur caractéristique d'influence de la précision de mesure étant acquise dans au moins une étape de procédé (92, 98, 100, 102, 104, 106, 108) au moyen d'une unité de capteur (20, 34, 46) du dispositif de télémétrie (10), une classe de précision de mesure qui peut être atteinte étant déterminée dans au moins une étape de procédé (94) au moyen d'une unité de calcul (58) du dispositif de télémétrie (10) en fonction de la grandeur caractéristique d'influence de la précision de mesure, au moins une instruction d'action étant donnée dans au moins une étape de procédé (96) en fonction de l'au moins une grandeur caractéristique d'influence de la précision de mesure acquise et/ou de la classe de précision de mesure qui peut être atteinte, sous la forme d'un signal optique, acoustique et/ou haptique, notamment au moyen d'une unité de sortie (60) du dispositif de télémétrie (10), laquelle donne à un utilisateur une instruction sur la manière dont il doit utiliser le dispositif de télémétrie à laser (12) pour atteindre une classe de précision de mesure, **caractérisé en ce que** dans au moins une étape de procédé (106), au moins une grandeur caractéristique d'influence de la précision de mesure, configurée en tant que grandeur caractéristique de mouvement, est acquise au moyen d'une unité de capteur (34) du dispositif de télémétrie (10), réalisée sous la forme d'une unité de caméra optique (36), la grandeur caractéristique de mouvement étant une grandeur caractéristique qui décrit un mouvement du dispositif de télémétrie (10) par rapport à son environnement.

2. Procédé selon la revendication 1, **caractérisé en ce que** dans au moins une étape de procédé (98), au moins une grandeur caractéristique d'influence de la précision de mesure supplémentaire, configurée en tant que lumière externe (84), est acquise au moyen de l'unité de capteur (34) réalisée sous la forme d'une unité de caméra optique (36).

3. Procédé selon l'une des revendications précédentes, **caractérisé en ce que** dans au moins une étape de procédé (100), au moins une grandeur caractéristique d'influence de la précision de mesure supplémentaire, configurée en tant que contraste, est acquise au moyen de l'unité de capteur (34) réalisée sous la forme d'une unité de caméra optique (36).

4. Procédé selon l'une des revendications précédentes, **caractérisé en ce que** dans au moins une étape de procédé (102), au moins une grandeur caractéristique d'influence de la précision de mesure supplémentaire, configurée en tant que luminosité, est acquise au moyen de l'unité de capteur (34) réalisée sous la forme d'une unité de caméra optique (36).

5. Procédé selon l'une des revendications précédentes, **caractérisé en ce que** dans au moins une étape de procédé (104), au moins une grandeur caractéristique d'influence de la précision de mesure supplémentaire, configurée en tant qu'histogramme d'image, est acquise au moyen de l'unité de capteur (34) réalisée sous la forme d'une unité de caméra optique (36).

6. Procédé selon l'une des revendications précédentes, **caractérisé en ce que** dans au moins une étape de procédé (108), au moins une grandeur caractéristique d'influence de la précision de mesure supplémentaire, configurée en tant que grandeur caractéristique de mouvement, est acquise au moyen d'une unité de capteur (46) du dispositif de télémétrie (10) réalisée sous la forme d'une unité de capteur inertiel (48).

7. Dispositif de télémétrie à laser (12) portatif, qui est un dispositif de télémétrie (10) réalisé sous la forme d'un dispositif de télémétrie à laser (12), qui peut fonctionner conformément à un procédé selon l'une des revendications précédentes, comprenant au moins une unité de capteur (20, 34, 46) qui est prévue pour une acquisition d'au moins une grandeur caractéristique d'influence de la précision de mesure, comprenant au moins une unité de calcul (58) qui est prévue pour le traitement de l'au moins une grandeur caractéristique d'influence de la précision de mesure, et comprenant au moins une unité de sortie optique, acoustique et/ou haptique (60), au moins une instruction d'action sous la forme d'un signal optique, acoustique et/ou haptique pouvant être émise au moyen de l'unité de sortie (60) en fonction de l'au moins une grandeur caractéristique d'influence de la précision de mesure acquise, laquelle donne à un utilisateur une instruction sur la manière dont il doit utiliser le dispositif de télémétrie à laser (12) pour atteindre une classe de précision de mesure, **caractérisé en ce que** la grandeur caractéristique d'influence de la précision de mesure est configurée en tant que grandeur caractéristique de mouvement et peut être acquise au moyen d'une unité de capteur (34) du dispositif de mesure de distance (10) réalisée sous la forme d'unité de caméra optique (36), la grandeur caractéristique de mouvement étant une grandeur caractéristique qui décrit un mouvement du dispositif de télémétrie (10) par rapport à son environnement.

8. Dispositif de télémétrie à laser portatif selon la revendication 7, **caractérisé par** l'unité de capteur (34) réalisée sous la forme de l'unité de caméra optique (36), qui est prévue pour acquérir au moins une grandeur caractéristique d'influence de la précision de mesure supplémentaire configurée en tant que lumière parasite (84), contraste, luminosité, histogramme d'image et/ou la grandeur caractéristique de mouvement.

9. Dispositif de télémétrie à laser portatif selon la revendication 7 ou 8, **caractérisé par** au moins une unité de détection (46) réalisée sous la forme d'une unité de capteur inertiel (48), qui est prévue pour acquérir au moins une grandeur caractéristique d'influence de la précision de mesure supplémentaire, configurée en tant que grandeur caractéristique de mouvement, notamment une vitesse et/ou une accélération.
